# EUROPEAN PATENT SPECIFICATION

(11) **EP 1 995 814 B1**
(45) Date of publication and mention of the grant of the patent: **10.03.2010**
(21) Application number: 08163022.0
(22) Date of filing: 16.09.2005
(51) Int. Cl.: H01M 8/04

(54) **Fuel cell stack**
Brennstoffzellenstapel
Bloc de pile à combustible

(30) Priority: 17.09.2004 KR 20040074605
(43) Date of publication of application: 26.11.2008
(62) Divisional of application: 05108519.9
(73) Proprietor: Samsung SDI Co., Ltd., Suwon-si Gyeonggi-do (KR)
(72) Inventor: Suh, Jun-Won Legal & IP Team, Samsung SDI Co., LTD., Gyeonggi-do (KR); Na, Young-Seung Legal & IP Team, Samsung SDI Co., LTD., Gyeonggi-do (KR); An, Seong-Jin Legal & IP Team, Samsung SDI Co., LTD., Gyeonggi-do (KR); Kweon, Ho-Jin Legal & IP Team, Samsung SDI Co., LTD., Gyeonggi-do (KR)
(74) Representative: Hengelhaupt, Jürgen

(56) References cited:
- WO-A-98/21773

## Description

### FIELD OF THE INVENTION

The present invention relates to a fuel cell stack having an improved cooling structure.

### BACKGROUND OF THE INVENTION

A fuel cell is an electricity generating system converting chemical reaction energy into electric energy through a reaction between an oxidant such as oxygen and hydrogen contained in a hydrocarbon material such as methanol, ethanol, or natural gas. Fuel cells generate electric energy through an electrochemical reaction between a hydrogen-containing material and an oxidant without combustion. The electrochemical reaction also generates heat as a byproduct. Illustrative examples of such fuel cells are disclosed in e.g. WO 98/21773.

Depending on the type of electrolyte used, the fuel cells are classified into phosphoric acid fuel cells operating at temperatures ranging from 120°C to 150°C, molten carbonate fuel cells operating at temperatures ranging from 600°C to 700°C, solid oxide fuel cells operating at temperatures above 1,000°C, polymer electrolyte membrane fuel cells (PEMFC) operating at temperatures ranging from room temperature to 100°C or less, and alkaline fuel cells. Although these fuel cells all operate according to the same principle, they are different from one another in terms of operating temperatures, and the types of fuels, catalysts, and electrolytes used.

Among these fuel cells, the recently developed PEMFC has superior output characteristics, low operating temperatures, and fast starting and response characteristics. So, the PEMFC has a wide range of applications including use in mobile power sources for vehicles, distributed power sources for home or buildings, and small power sources for electronic apparatus.

The PEMFC includes a stack which is the main body of the fuel cell, a fuel tank, and a fuel pump supplying the fuel from the fuel tank to the stack. The PEMFC may further include a reformer for reforming the fuel to generate hydrogen and for supplying the hydrogen to the stack in the course of supplying the fuel stored in the fuel tank to the stack.

In the PEMFC, the fuel stored in the fuel tank is supplied to the reformer by a fuel pump. The reformer reforms the fuel and generates hydrogen. The stack generates electric energy through an electrochemical reaction between the hydrogen and oxygen or some other oxidant.

On the other hand, a fuel cell system may employ a direct methanol fuel cell (DMFC) where a liquid methanol fuel is directly supplied to the stack. The DMFC, unlike the PEMFC, does not require a reformer.

In the fuel cell system, the stack generating electric energy is constructed with several to tens of unit cells each having a membrane-electrode assembly (MEA) and a separator which is also referred to as a bipolar plate in the art. The MEA has an anode and a cathode formed on the two surfaces of an electrolyte membrane. The unit cells are the electricity generators of the stack.

The separator serves as a passage through which hydrogen and oxygen needed for reactions of the fuel cell are supplied to the anode and the cathode on the membrane-electrode. In addition, the separator serves as a conductor serially coupling the anode and the cathode of the MEA.

Through the separator, the hydrogen-containing fuel is supplied to the anode, and oxygen, oxygen-containing air, or some other oxidant is supplied to the cathode. During the process, electrochemical oxidation of fuel gas occurs at the anode, and electrochemical reduction of oxygen occurs at the cathode, generating an electron current. Electricity, heat, and water are produced by the electron current.

The stack must be maintained at a proper operating temperature in order to secure stability of the electrolyte membrane of the MEA and to prevent deterioration in performance of the MEA. A stack that is not maintained at proper operating temperatures may be damaged. Therefore, a cooling unit that circulates air or water is also provided that continuously absorbs and releases the heat generated by the stack during the operation of the fuel cell system.

In a conventional cooling scheme, in order to inject the coolant between the unit cells of the stack, cooling channels are formed between the separators or in cooling plates that are located between the unit cells. The coolant flowing through the cooling channels formed between the separators or in the cooling plates can rapidly dissipate the heat generated from an electrochemical reaction in the unit cells.

However, the addition of cooling plates located between the unit cells increases the thickness of the fuel cell system. Where cooling plates are not used and the cooling channels are formed between the separators, the thickness of the separators increases, therefore increasing the thickness of the fuel cell system. An increase in the volume of the stack limits the capability to design a compact fuel cell system.

Further, because the conventional stack cooling structure must include both an air pump for supplying air containing oxygen to the stack and a cooling fan for supplying a cooling air to the stack, more parts are needed and more power is consumed by the fuel cell system.

### SUMMARY OF THE INVENTION

The present invention addresses the problems associated with the conventional stacks, by minimizing the volume of the stack and reducing power consumption as well as the number of components of the fuel cell system.

According to one embodiment of the present invention, a fuel cell stack including an electricity generating assembly having a plurality of unit cells is presented, as defined in the claims.

### BRIEF DESCRIPTION OF THE DRAWINGS

Fig. 1 is a block diagram of a fuel cell system.

Fig. 2 is a block diagram of another fuel cell system.

Fig. 3 is an exploded perspective view of a first embodiment for a stack of the present invention.

Fig. 4 is a plan view of the stack shown in Fig. 3.

Fig. 5 is an exploded perspective view of a second embodiment for a stack of the present invention.

Fig. 6 is a partial cross sectional view of the stack shown in Fig. 5.

### DETAILED DESCRIPTION

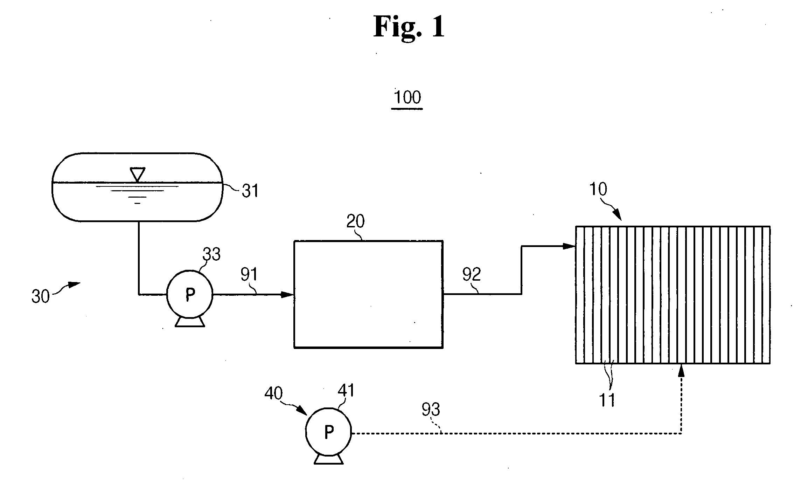

Fig. 1 is a block diagram of a fuel cell system 100. The fuel cell system 100 includes a stack 10 constructed by stacking a plurality of unit cells or electricity generators 11 generating electric energy through a chemical reaction between hydrogen and oxygen or another oxidant, a fuel supply unit 30 supplying a hydrogen-containing fuel to the stack 10, and an air supply unit 40 supplying air to the stack 10.

The fuel supply unit 30 includes a fuel tank 31 storing the fuel, and a fuel pump 33 coupled to the fuel tank 31 to discharge the fuel stored in the fuel tank 31. The fuel is supplied from the fuel supply unit 30 through the reformer 20 to the stack 10. Therefore, the reformer 20 is located between the fuel supply unit 30 and the stack 10 and is coupled to the fuel supply unit 30 and the stack 10 through first and second supply lines 91, 92.

The fuel cell system may be constructed according to a direct oxidation cell scheme where the liquid fuel is directly supplied to the stack 10. In the direct oxidation scheme, the reformer 20 is eliminated from the fuel cell system 100 that is constructed according to the PEMFC scheme. The fuel cell system used as an exemplary system in the description below is constructed according to the PEMFC scheme. However, the present invention is not limited to fuel cell systems constructed according to this scheme and may be applied to equivalent structures.

The reformer 20 generates hydrogen from the liquid fuel through a reforming reaction. In addition, the reformer 20 reduces a concentration of carbon monoxide contained in the reformed gas. The reformer 20 includes a reforming reactor for reforming the liquid fuel to generate the reformed gas containing hydrogen, and a carbon monoxide reducing section for reducing the concentration of the carbon monoxide in the reformed gas. The reforming reactor uses a catalytic reaction such as a steam reforming reaction, a partial oxidation reaction, or an auto-thermal reaction. The carbon monoxide reducing section may use a catalytic reaction, such as a water-gas shift (WGS) reaction or a preferential oxidation (PROX) reaction, or it may use a purification reaction of hydrogen with a separating membrane.

The fuel used in the present invention, may be a hydrocarbon such as natural gas or an alcohol such as methanol or ethanol. Also, a pure oxygen stored in an additional storage device or oxygen contained in atmospheric air may be used for the reaction.

The air supply unit 40 is coupled to the stack 10. The air supply unit 40 includes an air pump 41 drawing air and supplying it to the stack 10 with a predetermined pumping pressure. The air supply unit 40 and the stack 10 are coupled together through a third supply line 93.

A portion of the air supplied from the air supply unit 40 is used for the electrochemical reaction in the electricity generators 11 and another portion is used to cool the stack 10. The fuel cell system 100 does not have any additional devices for cooling the stack 10 aside from the air supply unit 40.

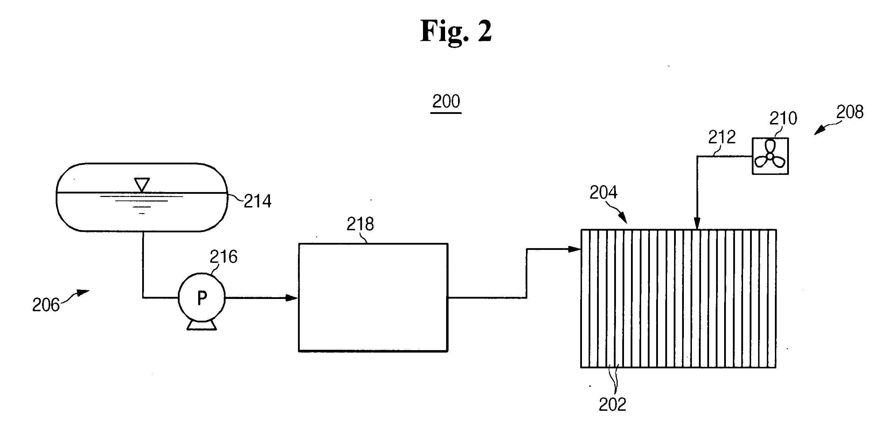

Fig. 2 is a block diagram of a fuel cell system 200. In the embodiment of Fig. 2, instead of the air supply unit 40 of the aforementioned embodiment, a coolant supply unit 208 is used. The fuel cell system 200 includes a stack 204 constructed by a plurality of unit cells or electricity generators 202 generating electric energy through a chemical reaction between hydrogen and oxygen, a fuel supply unit 206 supplying a hydrogen-containing fuel to the electricity generators 202, and a coolant supply unit 208 supplying air as a coolant to the electricity generators 202.

Because some portion of the air supplied as a coolant from the coolant supply unit 208 is used for the electrochemical reaction in the electricity generators 202, the fuel cell system 200 does not require an additional air supply unit.

The coolant supply unit 208 includes a cooling fan 210. The cooling fan 210 is coupled to the stack 204 through a fourth supply line 212, so that the coolant can be supplied to the stack 204. Because the coolant must be used also as the oxygen source for the MEA, atmospheric air is used as the coolant.

The fuel tank 214, the fuel pump 216, and the reformer 218 of this embodiment are similar to those of the embodiment of Fig. 1 and their detailed description is omitted.

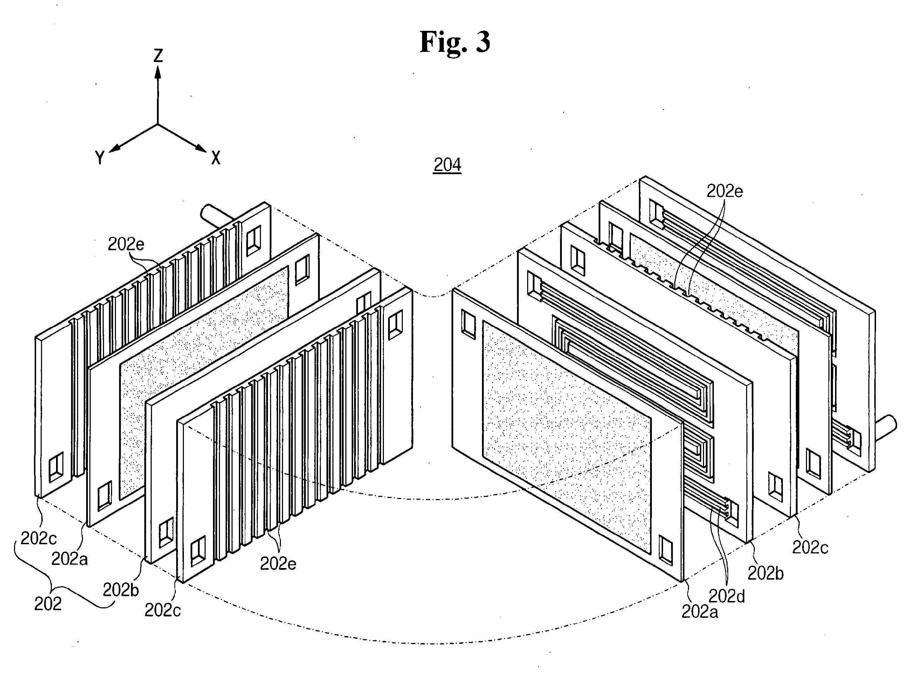

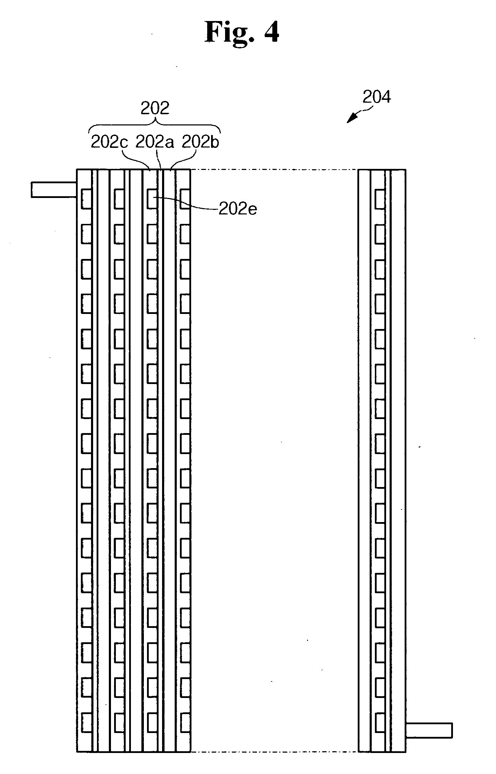

Fig. 3 is an exploded perspective view of the stack 204 shown in Fig. 2. Fig. 4 is a plan view of the stack 204. The stack 204 is described with reference to Figs. 2, 3, and 4. The stack 10 shown in Fig. 1 has the same structure as the stack 204 shown in Fig. 2.

The stack 204 includes a plurality of electricity generators 202 generating electric energy through oxidation and reduction reactions between a reformed gas supplied from the reformer 218 and air. Each of the electricity generators 202 is a unit cell generating electric energy.

Each of the unit cells or electricity generators 202 includes a MEA 202a performing the oxidation and reduction reactions between the hydrogen and the oxygen, and separators 202b, 202c supplying the hydrogen and the oxygen to the MEA 202a. The electricity generators 202 are constructed by interposing the MEA 202a between the separators 202b, 202c, including a first separator 202b and a second separator 202c, and attaching the separators 202b, 202c to both sides of the MEA 202a. The stack 204 is constructed by sequentially stacking a plurality of the electricity generators 202.

An anode is formed on one side of the MEA 202a, and a cathode is formed on the other side of the MEA 202a. The MEA 202a has an electrolyte membrane between the anode and the cathode. The anode receives the reformed gas through the first separator 202b. The anode is constructed with a catalyst layer for decomposing the reformed gas into electrons and hydrogen ions and a gas diffusion layer for promoting movement of the electrons and the reformed gas. The cathode receives the air through the second separator 202c. The cathode is constructed with a catalyst layer facilitating a reaction between the electrons, the hydrogen ions, and oxygen contained in the air, to generate water, and a gas diffusion layer promoting flow of the oxygen. The electrolyte membrane is made of a solid polymer electrolyte having a thickness of 50µm to 200µm. The electrolyte membrane has an ion exchange function for moving the hydrogen ions generated by the catalyst layer of the anode into the catalyst layer of the cathode.

The stack 204 generates electric energy, thermal energy, and water by reactions represented by the following equations:

Anode Reaction H₂ → 2H⁺ + 2e⁻

Cathode Reaction ½O₂ + 2H⁺ + 2e⁻ → H₂O

Overall Reaction H₂ + ½O₂ → H₂O + (electric current) + (thermal energy)

The above reactions can be summarized as follows. A reformed gas is supplied to the anode of the MEA 202a through a first separator 202b, and air is supplied to the cathode through a second separator 202c. When the reformed gas flows through the anode, hydrogen is decomposed into an electron and a proton (hydrogen ion). When the proton passes through the electrolyte membrane, the electron, oxygen ion, and proton are combined into water at the cathode. The electrons generated at the anode cannot pass through the electrolyte membrane but move to the cathode through an external circuit. In the course of this process, an electric current and water are generated in the stack 204, and thermal energy (heat) is generated as a byproduct.

The first and second separators 202b, 202c serve as conductors which electrically couple the anode and the cathode. They also serve as passages through which the reformed gas and air are supplied to the anodes and the cathodes.

Gas channels 202d through which the reformed gas flows are formed on one surface of the first separator 202b. Air passages 202e through which the air, used for the reaction, and the cooling air, used to cool the heated electricity generators 202, flow are formed on one surface of the second separator 202c. In the stack 204, the other surfaces of the first and second separators 202b, 202c where the gas channel 202d and the air passages 202e are not formed are attached together to construct the electricity generator 202.

In the fuel cell system 200 including the stack 204, the cooling air supplied from the coolant supply unit 208 flowing through the air passages 202e can cool the heated electricity generators 202 and supply the air used for the reaction in the MEA 202a. Because, in the stack 204, the air used for the reaction and the cooling air are simultaneously supplied through the air passages 202e, there is no need for conventional cooling structures like cooling channels and cooling plates.

Further, there is no need to form air passages on the first separators 202b, in addition to the air passages 202e formed on the second separators 202c, and the overall thickness of the electricity generators 202 can be reduced. The thickness of the stack 204 which is a stack of the electricity generators 202, is also reduced.

An experiment conducted on stacks used for a 35W fuel cell produced a comparison between a volume of the stack 204 according to the embodiments of the present invention and a volume of a conventional stack. This experiment showed that a conventional stack of volume 251 cc including cooling plates is equivalent to a stack of the present invention with a volume of 211 cc. Accordingly, the volume of the stack of the invention can be reduced by about 16% in comparison with the volume of the conventional stack including cooling plates.

The air passages 202e, formed on the second separators 202c, are spaced apart at predetermined intervals. In the embodiment shown, the air passages 202e are straight lines extending along a direction from one edge to the other edge of the second separator 202c.

The air passages 202e are formed on a contacting surface of the second separator 202c and are in contact with the MEA 202a. Both ends of the air passages 202e are exposed to the exterior of the stack 204. One end of each air passage 202e is used as an air inlet, and the other end is used as an air outlet.

A portion of the air, supplied through the inlets into the air passages 202e, is supplied to the MEA 202a for generating electric energy. Another portion of the air, is discharged through the outlets to release the thermal energy generated from the electricity generators 202.

In the embodiment shown, the air passages 202e have a rectangular cross section. However, the invention is not limited to passages of rectangular cross section and the air passages 202e may have cross sections of various shapes including semicircular and trapezoidal cross sections.

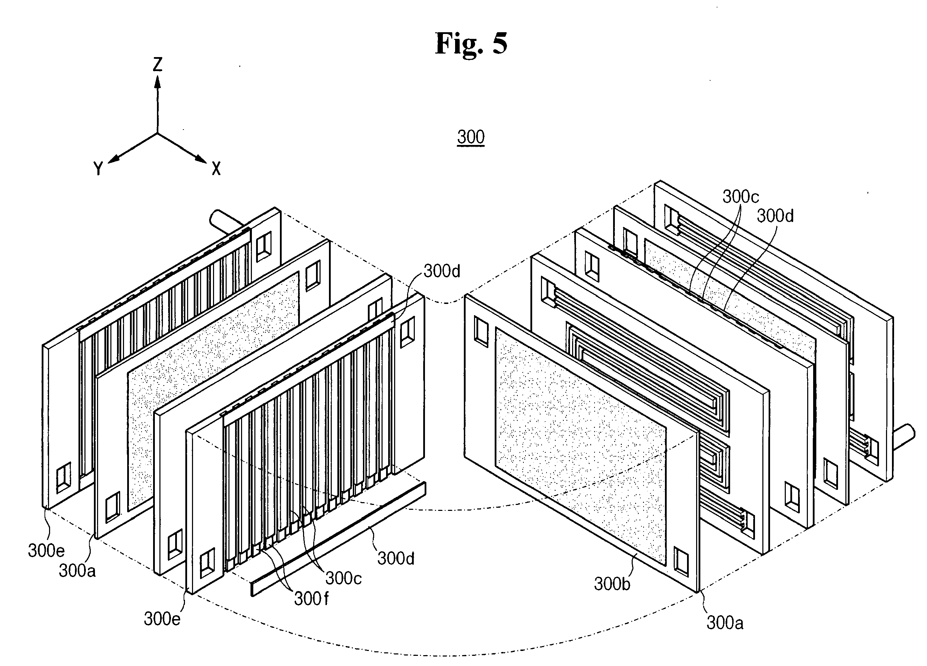

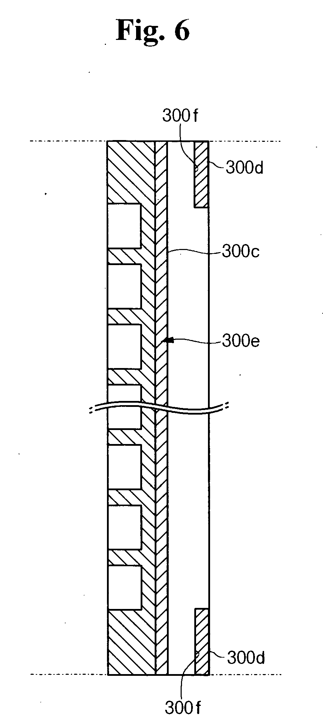

Fig. 5 is an exploded perspective view of an embodiment for a stack 300 of the present invention. Fig. 6 is a partial cross sectional view of the stack 300.

The similar parts of the embodiment of the invention stack 300 and the first embodiment stack 204 shown in Fig. 3 are omitted and only the differences are described in detail.

In the first embodiment stack 204, the air passages 202e are constructed by attaching the second separator 202c and the MEA 202a and consist of hollow spaces formed between the second separator 202c and the MEA 202a. In these hollow spaces, the second separator 202c and the MEA 202a are not attached together and cannot support each other. The hollow spaces are usually formed in inactive regions defined on the MEA 202a.

In the embodiment stack 300, supporting members 300d are attached to portions of air passages 300c corresponding to inactive regions 300b defined in an MEA 300a. The supporting members 300d are in contact with the MEA 300a.

The supporting members 300d are located along both inlet and outlet ends of the air passages 300c and extend along a direction perpendicular to the air passages 300c. Supporting members 300d are mounted on mounting portions 300f that are formed between air passages 300c on the second separator 300e. Depth of the mounting portions 300f corresponds to a thickness of the supporting member 300d.

As shown in Fig. 6, the mounting portions 300f are formed at both ends of the air passages 300c, and the supporting members 300d are closely attached to the mounting portions 300f. Therefore, the outer surfaces of the supporting members 300d and the second separators 300e are at the same level and the supporting members 300d can be uniformly attached to the inactive regions 300b of the MEA 300a. In the first embodiment stack 204, because the air passages 202e weaken the support between the second separator 202c and the MEA 202a, the stack 204 may get distorted. However, the supporting members 300d make it possible to prevent distortion in the embodiment stack 300 of the invention.

## Claims

1. A fuel cell stack (204, 300) comprising an electricity generating assembly having a plurality of unit cells (202) and generating electric energy through an electrochemical reaction using a fuel and an oxidant, each unit cell (202) comprising:
a membrane-electrode assembly (202a, 300a) having a first side and a second side;
a first separator (202b) located on the first side and a second separator (202c, 300e) located on the second side of the membrane-electrode assembly (202a, 300a);
a plurality of channels formed in the second separator (202c, 300e), the channels facing the membrane-electrode assembly (202a, 300a); and
a plurality of passages (202e, 300c) formed from the channels,
wherein the passages (202e, 300c) may be commonly used by the oxidant and a coolant used to cool the stack, **characterized in that**
the passages (202e, 300c) extend from one edge to another edge of the second separator (202c, 300e), and both ends of each passage (202e, 300c) are exposed to outside of the stack,
**characterized in that** each unit cell (202) further comprises a supporting member (300d) attached to portions of the passages (202e, 300c) corresponding to an inactive region (300b) of the membrane-electrode assembly (202a, 300a).

2. The fuel cell stack (204, 300) of claim 1, wherein each of the passages (202e, 300c) has a rectangular, semicircular or trapezoidal cross section.

3. The fuel cell stack (204, 300) of claim 1, wherein the passages (202e, 300c) are straight lines.

4. The fuel cell stack (204, 300) of claim 1, wherein the supporting member (300d) is as wide as the inactive region (300b) of the membrane-electrode assembly (202a, 300a).

5. The fuel cell stack (204, 300) of claim 1, wherein each unit cell (202) further comprises mounting portions (300f) formed on the second separator (202c, 300e) between the channels, wherein the supporting member (300d) is mounted on the mounting portions (300f).

6. The fuel cell stack (204, 300) of claim 5, wherein a depth of the mounting portion (300f) corresponds to a thickness of the supporting member (300d).

## Patentansprüche

1. Ein Brennstoffzellenstapel (204, 300), der eine Elektrizität generierende Anordnung mit einer Vielzahl von Einheitszellen (202) umfasst und elektrische Energie durch eine elektrochemische Reaktion unter Verwendung eines Brennstoffs und eines Oxidationsmittels generiert, wobei jede Einheitszelle (202) Folgendes umfasst:
eine Membran-Elektroden-Anordnung (202a, 300a) mit einer ersten Seite und einer zweiten Seite;
einen auf der ersten Seite angeordneten ersten Separator (202b) und einen auf der zweiten Seite der Membran-Elektroden-Anordnung (202a, 300a) angeordneten zweiten Separator (202c, 300e);
eine Vielzahl von in dem zweiten Separator (202c, 300e) ausgebildeten Kanälen, wobei die Kanäle der Membran-Elektroden-Anordnung (202a, 300a) zugewandt sind; und
eine Vielzahl von von den Kanälen gebildeten Durchgängen (202e, 300c),
wobei die Durchgänge (202e, 300c) gemeinsam von dem Oxidationsmittel und einem zum Kühlen des Stapels verwendeten Kühlmittel verwendet werden können, **dadurch gekennzeichnet, dass**
die Durchgänge (202e, 300c) sich von einer Kante zu einer weiteren Kante des zweiten Separators (202c, 300e) erstrecken und beide Enden jedes Durchgangs (202e, 300c) zur Außenseite des Stapels hin freigelegt sind,
**dadurch gekennzeichnet, dass** jede Einheitszelle (202) ferner ein Stützelement (300d) umfasst, das an Teilen der Durchgänge (202e, 300c), die einem inaktiven Bereich (300b) der Membran-Elektroden-Anordnung (202a, 300a) entsprechen, angebracht ist.

2. Der Brennstoffzellenstapel (204, 300) nach Anspruch 1, wobei jeder der Durchgänge (202e, 300c) einen rechteckigen, halbkreisförmigen oder trapezförmigen Querschnitt aufweist.

3. Der Brennstoffzellenstapel (204, 300) nach Anspruch 1, wobei die Durchgänge (202e, 300c) gerade Linien sind.

4. Der Brennstoffzellenstapel (204, 300) nach Anspruch 1, wobei das Stützelement (300d) so breit wie der inaktive Bereich (300b) der Membran-Elektroden-Anordnung (202a, 300a) ist.

5. Der Brennstoffzellenstapel (204, 300) nach Anspruch 1, wobei jede Einheitszelle (202) ferner Montierteile (300f) umfasst, die auf dem zweiten Separator (202c, 300e) zwischen den Kanälen ausgebildet sind, wobei das Stützelement (300d) auf den Montierteilen (300f) montiert ist.

6. Der Brennstoffzellenstapel (204, 300) nach Anspruch 5, wobei eine Tiefe des Montierteils (300f) einer Dicke des Stützelements (300d) entspricht.

## Revendications

1. Bloc de pile à combustible (204, 300) comprenant un ensemble de production d'électricité ayant une pluralité de cellules unitaires (202) et produisant de l'énergie électrique par réaction électrochimique en utilisant un combustible et un oxydant, chaque cellule unitaire (202) comprenant :
un ensemble membrane-électrode (202a, 300a) ayant un premier côté et un second côté ;
un premier séparateur (202b) situé sur le premier côté et un second séparateur (202c, 300e) situé sur le second côté de l'ensemble membrane-électrode (202a, 300a) ;
une pluralité de canaux formés dans le second séparateur (202c, 300e), les canaux étant tournés vers l'ensemble membrane-électrode (202a, 300a) ; et
une pluralité de passages (202e, 300c) formés à partir des canaux,
où les passages (202e, 300c) peuvent être communément utilisés par l'oxydant et un réfrigérant utilisé pour refroidir le bloc, **caractérisé en ce que** :
les passages (202e, 300c) s'étendent d'un bord à l'autre du second séparateur (202c, 300e), et les deux extrémités de chaque passage (202e, 300c) sont exposées sur l'extérieur du bloc,
**caractérisé en ce que** chaque cellule unitaire (202) comprend, en outre, un élément de support (300d) fixé à des parties des passages (202e, 300c) correspondant à une région inactive (300b) de l'ensemble membrane-électrode (202a, 300a).

2. Bloc de pile à combustible (204, 300) selon la revendication 1, dans lequel chacun des passages (202e, 300c) a une section transversale rectangulaire, semi-circulaire ou trapézoïdale.

3. Bloc de pile à combustible (204, 300) selon la revendication 1, dans lequel les passages (202e, 300c) sont des lignes droites.

4. Bloc de pile à combustible (204, 300) selon la revendication 1, dans lequel l'élément de support (300d) est aussi large que la région inactive (300b) de l'ensemble membrane-électrode (202a, 300a).

5. Bloc de pile à combustible (204, 300) selon la revendication 1, dans lequel chaque cellule unitaire (202) comprend, en outre, des parties de montage (300f) formées sur le second séparateur (202c, 300e) entre les canaux, dans lequel l'élément de support (300d) est monté sur les parties de montage (300f).

6. Bloc de pile à combustible (204, 300) selon la revendication 5, dans lequel une profondeur de la partie de montage (300f) correspond à une épaisseur de l'élément de support (300d).
